# FASCICULE DE BREVET EUROPEEN

(11) **EP 2 858 830 B1**
(45) Date de publication et mention de la délivrance du brevet: **17.01.2018**
(21) Numéro de dépôt: 13733389.4
(22) Date de dépôt: 12.06.2013
(51) Int. Cl.: B60B 19/12, B60B 19/00

(54) **ROUE OMNIDIRECTIONNELLE**
OMNIDIREKTIONALES RAD
OMNIDIRECTIONAL WHEEL

(30) Priorité: 12.06.2012 FR 1255494
(43) Date de publication de la demande: 15.04.2015
(73) Titulaire: New Live, 67660 Betschdorf (FR)
(72) Inventeur: OHRUH, Michel, F-67660 Betschdorf (FR)
(74) Mandataire: Rhein, Alain
(86) Numéro de dépôt international: PCT/FR2013/051371
(87) Numéro de publication internationale: WO 2013/186489

(56) Documents cités:
- EP-A1- 0 556 401
- NL-C2- 1 015 676
- US-A1- 2005 134 106
- US-A1- 2006 076 822
- US-A1- 2011 233 989

## Description

La présente invention concerne le domaine des engins roulants.

La présente invention trouvera notamment une application particulièrement avantageuse dans le domaine des fauteuils roulants destinés à des personnes présentant une mobilité physique réduite.

Cependant, l'invention pourra également être utilisée dans des domaines autres que celui des fauteuils roulants.

L'invention concerne plus particulièrement une roue omnidirectionnelle destinée à être montée notamment sur un fauteuil roulant pour permettre une mobilité de celui-ci dans toutes les directions. Une telle roue est connue du document NL 1015676 C2 et correspond au préambule de la revendication 1. Une roue traditionnelle comporte d'une part, en son centre, un moyeu qui permet d'assurer le guidage en rotation de la roue par rapport à un support, tel qu'un châssis ou un bras, et d'autre part, en périphérie, une jante sur laquelle est fixée une bande de roulement ou un pneu qui fait office de surface de roulement.

La rotation d'une roue permet une mobilité de celle-ci qui est aisée dans une direction qui est perpendiculaire à l'axe de rotation de la roue. Cependant, un déplacement de la roue selon une direction parallèle à l'axe de rotation est peu commode à cause des frottements du sol sur la surface de roulement de la roue.

Les fauteuils roulants nécessitent plus particulièrement la présence de roues permettant une mobilité multidirectionnelle fluide, de manière à faciliter les déplacements pour l'utilisateur dudit fauteuil.

Ainsi, on connait déjà, dans l'état de la technique, des fauteuils roulants comportant une multitude de roulettes, présentant un axe de rotation perpendiculaire à l'axe de rotation de la roue, lesdites roulettes pouvant notamment être montées au niveau de la circonférence de la roue. Ce système permet un déplacement latéral de la roue grâce aux roulettes, diminuant ainsi les frottements sur la surface de roulement de la roue.

Cependant, un tel système présente des inconvénients. En particulier, les roues associées à des roulettes présentent une grande complexité et, de ce fait, des difficultés d'assemblage et une fabrication onéreuse. D'autre part, pour permettre un roulage régulier et fluide, les roulettes doivent être montées au moins par paire. Un autre inconvénient de l'utilisation des roulettes réside dans le fait qu'elles manquent de souplesse sur leur bande de roulement et qu'elles ne conviennent pas pour un déplacement du fauteuil roulant sur un terrain irrégulier ; ainsi, l'utilisateur dudit fauteuil est limité dans ses déplacements, à des routes ne présentant que peu d'aspérités.

Certains documents de brevets évoquent également la mise en place de manchons disposés au niveau de la circonférence de la roue, lesdits manchons constituant une bande de roulement régulière devant permettre un déplacement de la roue d'avant en arrière et latéralement, sans contrainte de frottements sur le sol.

Par exemple, l'utilisation de manchons est décrite dans le document de brevet américain US 2008/018167. Cependant, les manchons tels que mentionnés dans ce document présentent inévitablement une compression au niveau de leur portion située à proximité de la jante de la roue. Cela rend plus difficile la rotation du manchon et, de ce fait, le déplacement latéral du fauteuil. Un tel système n'est donc pas optimal pour répondre au problème d'un déplacement multidirectionnel sans difficultés d'un fauteuil roulant.

Il en est de même dans le document de brevet NL 1 015 676, lequel décrit une roue pour patins à roulettes de type « roller » comportant une pluralité de rouleaux, ces derniers étant montés de sorte à ce qu'une pression de contact s'exerce entre deux rouleaux adjacents, aboutissant à un freinage de la rotation desdits rouleaux.

Dans ce document, les surfaces latérales des rouleaux s'engagent l'une contre l'autre sous pression, de sorte que chacun des rouleaux est compressé. Il en résulte une résistance à l'encontre de la rotation, cette résistance étant utilisée pour freiner le patin à roulettes.

On connait encore, par le document de brevet EP 0556 401 une roue pour fauteuil roulant comportant une pluralité de roues auxiliaires. Les roues auxiliaires comportent un arbre maintenu entre deux paliers comprenant une butée angulée permettant le maintien radial des roues auxiliaires, les paliers étant reliés au moyeu de la roue principale.

Ce système présente l'avantage d'éviter les contraintes de compression existant dans les autres dispositifs de l'état de la technique.

Cependant, le maintien de la roue par les paliers uniquement ne permet pas une rigidité et une solidité optimale du système. De plus, la rotation des roues auxiliaires autour de leurs arbres respectifs peut également être soumise à des contraintes de frottement ce qui entraine inévitablement des difficultés dans le déplacement latéral de la roue, et donc a *fortiori* du fauteuil roulant.

L'invention offre la possibilité de pallier les divers inconvénients de l'état de la technique en proposant une roue omnidirectionnelle comportant une pluralité d'anneaux, montés libres en rotation sur un tronçon d'arbre, présentant une mobilité optimale dans toutes les directions, du fait de la diminution importante des contraintes de frottement sur le sol.

A cet effet, la présente invention concerne une roue omnidirectionnelle comportant un moyeu central sur lequel est montée périphériquement une bande de roulement constituée d'une juxtaposition de roues ou de manchons disposés selon des plans radiaux. La roue omnidirectionnelle comporte des rayons reliés deux à deux par un tronçon d'arbre coaxial au moyeu et de section ronde sur lequel sont enfilés des anneaux libres en rotation, ledit tronçon d'arbre comportant encore des entretoises intercalées entre chacun desdits anneaux, lesdites entretoises étant conformées en sorte que lesdits anneaux demeurent dans une position radiale, le tronçon d'arbre étant constitué par une succession de plusieurs segments tubulaires aboutés.

Selon une autre particularité de l'invention, sur le tronçon d'arbre, entre deux entretoises, est montée une bague de roulement destinée à porter l'anneau. Cette bague de roulement est préférentiellement conformée de sorte à s'adapter à la forme de la paroi du segment tubulaire.

De manière intéressante, le moyeu est constitué de deux demies jantes solidarisées l'une à l'autre en enserrant les rayons.

La présente invention concerne également un module pour l'assemblage d'une roue omnidirectionnelle, ledit module comportant :
- un tronçon d'arbre aboutable qui comporte, à chacune de ses extrémités, un téton d'accouplement ou une empreinte creuse permettant la coopération avec un second tronçon d'arbre ;
- un rayon solidaire du tronçon d'arbre ;
- des anneaux entretoisés.

Avantageusement, le tronçon d'arbre du module selon l'invention est constitué par une succession de plusieurs segments tubulaires aboutés.

De façon préférentielle, ledit module comporte encore une bague de roulement entre deux entretoises.

La présente invention comporte de nombreux avantages. D'une part, la mobilité latérale de la roue omnidirectionnelle selon l'invention est particulièrement intéressante et permet un déplacement aisé du fauteuil roulant qui en est pourvu dans toutes les directions et sur tous les terrains, même ceux présentant des irrégularités, tels que des chemins de gravier ou de terre. D'autre part, la présence de bagues de roulement, pouvant être disposée sur le tronçon d'arbre entre deux entretoises, facilite la rotation desdits anneaux autour dudit tronçon d'arbre en réduisant les frottements, ce qui améliore encore la mobilité de la roue. Enfin, la roue omnidirectionnelle selon l'invention présente l'avantage d'une conception simple et d'un coût limité. Plus particulièrement, la présente invention est également relative à un module facilitant l'assemblage de ladite roue omnidirectionnelle.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue de face de la roue omnidirectionnelle selon l'invention comportant un anneau monté sur un tronçon d'arbre ;
- les figures 2A et 2B représentent chacune un anneau pouvant être utilisé pour être monté sur le tronçon d'arbre de la roue selon l'invention ;
- la figure 3 représente différents modes de réalisation des bagues de roulement pouvant être montées sur un tronçon d'arbre d'une roue omnidirectionnelle selon l'invention ;
- la figure 4 illustre schématiquement une vue de face d'un module pour l'assemblage d'une roue omnidirectionnelle selon l'invention ;
- la figure 5 montre une roue omnidirectionnelle complète, vue de face.

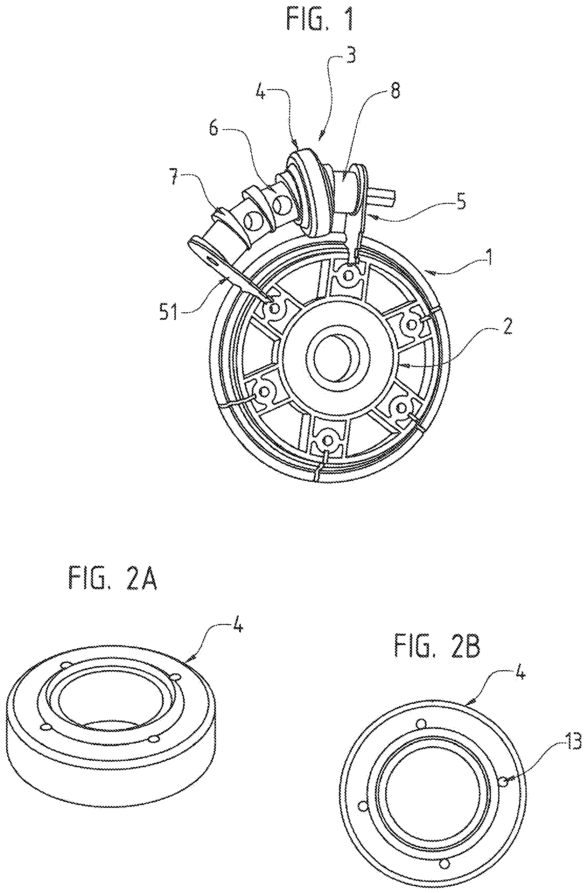

Tel que représentée sur la figure 1, la présente invention concerne une roue omnidirectionnelle 1 qui est préférentiellement destinée à être montée sur un fauteuil roulant pour permettre le déplacement aisé de celui-ci dans toutes les directions.

La roue omnidirectionnelle 1 selon l'invention comporte d'une part un moyeu central 2. Sur la périphérie dudit moyeu 2 est montée périphériquement une bande de roulement 3 constituée d'une juxtaposition de roues ou de manchons, préférentiellement des anneaux 4, disposés selon des plans radiaux.

Plus particulièrement, la roue omnidirectionnelle 1 selon la présente invention comporte encore des rayons, notamment référencés 5 et 51, montés sur le moyeu central 2, et reliés deux à deux, par exemple par un tronçon d'arbre 6.

Sur la figure 1 annexée sont représentés uniquement deux rayons 5 et 51 ; cependant, la roue omnidirectionnelle 1 selon l'invention peut comporter un nombre supérieur de rayons, par exemple six rayons montés radialement sur le moyeu central 2, les rayons étant reliés deux à deux par un tronçon d'arbre 6.

Ledit tronçon d'arbre 6, tel que visible notamment sur la figure 1, est coaxial au moyeu central 2 et présente une section ronde, de manière à permettre un enfilage d'une pluralité d'anneaux 4, qui sont alors libres en rotation autour dudit tronçon d'arbre 6.

Les anneaux 4 utilisés sur la roue omnidirectionnelle selon l'invention sont illustrés sur les figures 2A et 2B jointes.

Lesdits anneaux 4 destinés à être enfilés sur un tronçon d'arbre 6 d'une roue 1 selon l'invention comportent préférentiellement au moins un orifice 13, et de préférence une pluralité d'orifices 13. Ces derniers permettent avantageusement un écartement desdits anneaux de manière à faciliter leur enfilage sur le tronçon d'arbre 6.

La présence de ces anneaux 4, qui sont de manière préférentielle fabriqués en un matériau élastomère leur conférant une certaine flexibilité, permet une mobilité complète du fauteuil roulant équipé de roues omnidirectionnelles 1 selon la présente invention.

En effet, la roue 1 en elle-même permet une mobilité du fauteuil d'avant vers l'arrière, c'est-à-dire selon une direction perpendiculaire à l'axe de rotation du moyeu central 2.

De plus, grâce aux caractéristiques de la présente roue 1 qui seront détaillées ci-après, les anneaux 4, de part leur rotation autour du tronçon d'arbre 6, permettent quant à eux une mobilité du fauteuil dans les autres directions que la direction perpendiculaire à l'axe du moyeu 2.

Préférentiellement, le tronçon d'arbre 6 comprend également des entretoises 7 qui sont intercalées entre chacun des anneaux 4 enfichés sur ledit tronçon d'arbre 6. Lesdites entretoises 7 sont notamment conformées de manière à permettre un maintien des anneaux 4 dans une position radiale.

Un tel maintien permet notamment d'éviter de comprimer les anneaux 4 et donc de faciliter la rotation de ces derniers pour un déplacement fluide de la roue omnidirectionnelle 1 dans toutes les directions.

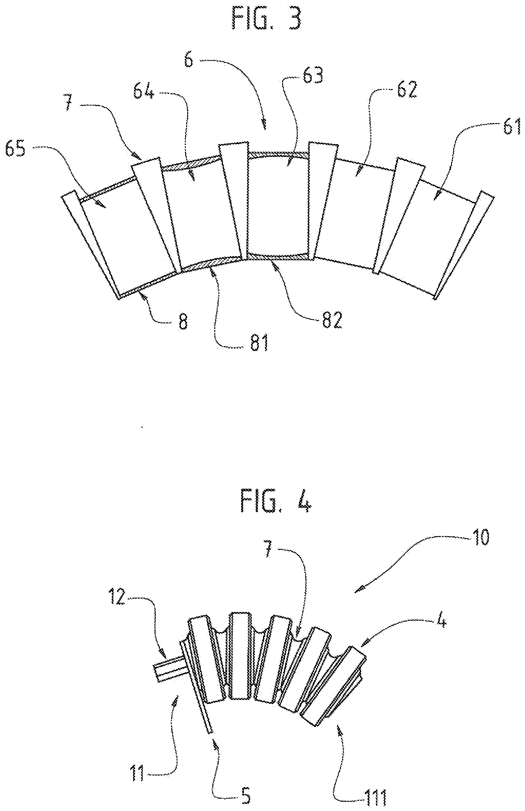

Pour maintenir les anneaux 4 dans une position radiale, les entretoises 7 présentent préférentiellement une portion plus large au niveau de l'arc de cercle du tronçon d'arbre 6 qui est opposé au moyeu central 2 et une portion plus étroite du coté du tronçon d'arbre 6 proche dudit moyeu 2. Un tel mode de réalisation est notamment illustré sur les figures 1 et 3 ci-jointes.

Pour en revenir à présent au tronçon d'arbre 6, celui-ci est préférentiellement constitué par une succession de plusieurs segments tubulaires aboutés 61 à 65, représentés notamment sur la figure 3 annexée.

Ainsi, au niveau de chaque palier existant entre deux segments tubulaires adjacents, par exemple 61 et 62, une entretoise 7 est disposée, de manière à maintenir les anneaux 4 dans une position radiale.

Une telle conformation, incluant une pluralité de segments tubulaires 61 à 65, permet également une rotation facilitée des anneaux 4 autour du tronçon d'arbre 6, de sorte à permettre un déplacement fluide de la roue omnidirectionnelle 1 selon l'invention, et cela dans toutes les directions.

Il est également visible, sur la figure 3, que la paroi externe d'un segment tubulaire 61 à 65 peut soit être droite, soit être convexe, ou bien encore être concave. Cette paroi externe peut également présenter toute autre forme, telle qu'une forme de rainures ou de vagues.

Selon un exemple de réalisation particulièrement avantageux de l'invention, la roue omnidirectionnelle 1 comporte également une bague de roulement 8, montée entre deux entretoises 7, et sur laquelle repose un anneau 4.

Il est entendu que, préférentiellement, chacun des anneaux 4 de la roue omnidirectionnelle 1 peut être monté sur une bague de roulement 8. Cependant il est également envisageable que seulement une partie des anneaux 4 soient montés sur une bague de roulement 8.

La bague de roulement 8 est conformée de telle sorte à s'adapter à la forme de la paroi du segment tubulaire 61 à 65 sur laquelle ladite bague 8 est montée. Une représentation schématique de la conformation possible des bagues de roulement 8, 81 et 82 est visible sur la figure 3, lorsque la paroi du segment tubulaire est respectivement droite, concave ou convexe.

La bague de roulement 8, 81 ou 82 comporte préférentiellement une fente permettant de faciliter l'engagement de ladite bague 8, 81 ou 82 sur un segment tubulaire, respectivement 65, 64 et 63, du tronçon d'arbre 6.

La présence de cette bague de roulement 8, 81 ou 82, entre un anneau 4 et le tronçon d'arbre 6, entre deux entretoises 7, favorise avantageusement le glissement et donc la rotation dudit anneau 4 autour du tronçon 6.

Pour en revenir à présent au moyeu central 2 de la roue omnidirectionnelle 1, celui-ci est avantageusement constitué par deux demies jantes, qui sont préférentiellement solidarisées entre elles, de manière à enserrer les rayons 5, 51.

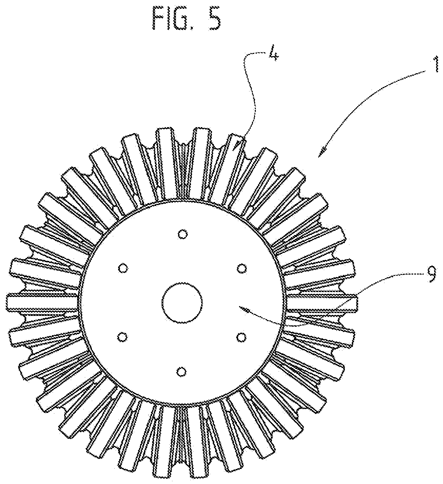

L'une des deux demi-jantes 9 est notamment visible sur la figure 5 annexée, celle-ci représentant une roue omnidirectionnelle 1 complète selon l'invention, présentant une pluralité d'anneaux 4 sur l'ensemble de la circonférence de ladite roue 1.

La présente invention concerne également un module 10 destiné à l'assemblage d'une roue omnidirectionnelle selon l'invention. Un tel module 10 est représenté sur la figure 4 jointe.

Ledit module 10 selon l'invention comporte dans un premier temps un tronçon d'arbre 6, non visible sur la figure 4, pouvant être abouté à un second tronçon d'arbre.

Le tronçon d'arbre 6 comprend, à chacune de ses extrémités 11 et 111, un téton d'accouplement 12 ou une empreinte creuse, non visible sur la figure 4, permettant avantageusement la coopération dudit tronçon 6 avec un second tronçon d'arbre d'un second module.

Ainsi, le tronçon d'arbre 6 peut comporter, à chacune de ses extrémités 11 et 111, un téton d'accouplement 12. Les tronçons d'arbre adjacents devront alors comporter une empreinte creuse à leur extrémité coopérant avec le tronçon 6.

Selon un autre mode de réalisation, le tronçon d'arbre 6 comprend, à chacune des deux extrémités, 11 et 111, une empreinte creuse. Dans ce cas précis, le téton d'accouplement 12 peut être une pièce rapportée indépendante du module 10. Il est également possible que les tronçons d'arbres des modules adjacents comportent des tétons d'accouplement à leur extrémité coopérant avec ledit tronçon d'arbre 6.

Selon un mode de réalisation préférentiel, qui est celui représenté sur la figure 4, à une de ses extrémités 11, ledit tronçon 6 comporte un téton d'accouplement 12 ; à l'extrémité opposée 111, ledit tronçon 6 comporte une empreinte creuse. Ainsi, de façon particulièrement avantageuse, le téton d'accouplement 12 d'un tronçon d'arbre peut coopérer avec une empreinte creuse d'un second tronçon, maintenant ainsi deux tronçons 6 adjacents solidaires l'un à l'autre.

Avantageusement, le téton d'accouplement et/ou l'empreinte creuse présente également une fonction anti-rotation des tronçons d'arbres 6 les uns par rapport aux autres lorsque ceux-ci sont assemblés pour former une roue omnidirectionnelle 1 selon l'invention.

Le tronçon d'arbre 6 du module 10 selon l'invention est préférentiellement constitué par une pluralité de segments tubulaires, non visibles sur la figure 4.

Le module 10 selon l'invention comporte également un rayon 5, solidaire du tronçon d'arbre 6, et destiné à être monté sur un moyeu 2. Sur la figure 4 le rayon 5 est solidaire au niveau de l'extrémité 11 du tronçon 6 comportant le téton d'accouplement 12. Cependant, un tel mode de réalisation ne doit pas être considéré comme étant limitatif du module 10 selon l'invention ; en effet, le rayon 5 peut également être solidaire au niveau de l'extrémité 111 dudit tronçon 6.

Pour terminer, le module 10 pour l'assemblage de la roue omnidirectionnelle 1 comporte des anneaux 4 préférentiellement en matériau élastomère, deux anneaux 4 étant séparés par une entretoise 7.

Selon un mode de réalisation intéressant, le module 10 selon l'invention comporte également une bague de roulement 8 montée entre deux entretoises 7, ladite bague 8 portant un anneau 4 et facilitant la rotation de celui-ci autour du tronçon d'arbre 6 du module 10.

Ledit module 10 selon l'invention permet d'assembler, de façon particulièrement aisée et rapide, la roue omnidirectionnelle 1 selon l'invention.

En effet, dans un premier temps, un nombre adéquat de modules 10 selon l'invention est monté sur un moyeu central 2, par l'intermédiaire des rayons 5.

Préférentiellement, on appose ensuite les deux demi-jantes et on les solidarise l'une à l'autre de manière à rapprocher et enserrer les rayons 5.

On obtient alors une roue omnidirectionnelle 1 complète telle que représentée sur la figure 5 annexée, et qui permet un déplacement d'un fauteuil roulant, équipé par une pluralité de roues omnidirectionnelles 1, dans toutes les directions et sans aucune difficulté.

## Revendications

1. Roue omnidirectionnelle (1) comportant un moyeu central (2) sur lequel est montée périphériquement une bande de roulement (3) constituée d'une juxtaposition de roues ou de manchons disposés selon des plans radiaux, ladite roue omnidirectionnelle (1) comportant des rayons (5, 51) reliés deux à deux par un tronçon d'arbre (6) coaxial au moyeu (2) et de section ronde sur lequel sont enfilés des anneaux (4) libres en rotation, ladite roue (1) étant **caractérisée en ce que** ledit tronçon d'arbre (6) comporte encore des entretoises (7) intercalées entre chacun desdits anneaux (4), lesdites entretoises (7) étant conformées en sorte que lesdits anneaux (4) demeurent dans une position radiale et **en ce que** ledit tronçon d'arbre (6) est constitué par une succession de plusieurs segments tubulaires (61, 62, 63, 64, 65) aboutés.

2. Roue omnidirectionnelle (1) selon la revendication 1 **caractérisée en ce que**, sur le tronçon d'arbre (6), entre deux entretoises (7), est montée une bague de roulement (8) destinée à porter l'anneau (4).

3. Roue omnidirectionnelle (1) selon la revendication 2 **caractérisée en ce que** la bague de roulement (8, 81, 82) est conformée de sorte à s'adapter à la forme de la paroi du segment tubulaire (61, 62, 63, 64, 65).

4. Roue omnidirectionnelle (1) selon l'une quelconque des revendications 1 à 3 **caractérisée en ce que** le moyeu (2) est constitué de deux demies jantes (9) solidarisées l'une à l'autre en enserrant les rayons (5, 51).

5. Module (10) pour l'assemblage d'une roue omnidirectionnelle (1) selon l'une quelconque des revendications 1 à 4 comportant :
- un tronçon d'arbre (6) aboutable qui comporte, à chacune de ses extrémités (11, 111), un téton d'accouplement (12) ou une empreinte creuse permettant la coopération avec un second tronçon d'arbre ;
- un rayon (5) solidaire du tronçon d'arbre (6) ;
- des anneaux (4) entretoisés.

6. Module (10) selon la revendication 5 **caractérisé en ce que** le tronçon d'arbre (6) est constitué par une succession de plusieurs segments tubulaires aboutés (61, 62, 63, 64, 65).

7. Module (10) selon l'une quelconque des revendications 5 ou 6 **caractérisé en ce qu'**il comporte encore une bague de roulement (8) entre deux entretoises (7).

## Patentansprüche

1. Omnidirektionales Rad (1), umfassend eine zentrale Nabe (2), an deren Umkreis eine Lauffläche (3) gelagert ist, die aus einer Aneinanderreihung von in radialen Ebenen angeordneten Rädern oder Hülsen besteht, wobei das besagte omnidirektionale Rad (1) Speichen (5, 51) umfasst, die paarweise durch einen Wellenabschnitt (6) verbunden sind, der koaxial zur Nabe (2) ist und einen runden Querschnitt aufweist, auf dem freidrehende Ringe (4) aufgesteckt sind, wobei das Rad (1) **dadurch gekennzeichnet ist, dass** der besagte Wellenabschnitt (6) auch Abstandsringen (7) umfasst, die zwischen jedem der besagten Ringe eingefügt sind (4), wobei die Abstandsringen (7) so geformt sind, dass die besagten Ringe (4) in einer radialen Position bleiben, und dadurch, dass der besagte Wellenabschnitt (6) aus einer Folge von mehreren aneinander gestossenen rohrförmigen Segmenten (61, 62, 63, 64, 65) besteht.

2. Omnidirektionales Rad (1) nach Anspruch 1, **dadurch gekennzeichnet, dass** auf dem Wellenabschnitt (6) zwischen zwei Abstandsringen (7) ein Lagerring (8) gelagert ist, der dazu bestimmt ist, den Ring (4) zu tragen.

3. Omnidirektionales Rad (1) nach Anspruch 2, **dadurch gekennzeichnet, dass** der Lagerring (8, 81, 82) so geformt ist, dass er sich an die Form der Wand des rohrförmigen Segmentes (61, 62, 63, 64, 65) anpasst.

4. Omnidirektionales Rad (1) nach irgendeinem der Ansprüche 1 bis 3, **dadurch gekennzeichnet, dass** die Nabe (2) aus zwei Hälbrädern (9) besteht, die fest mit einander verbunden sind, wobei sie die Speichen (5, 51) umschließen.

5. Modul (10) zur Zusammenfügung eines omnidirektionalen Rades (1) nach irgendeinem der Ansprüche 1 bis 4, umfassend:
- einen zusammenfigbaren Wellenabschnitt (6), der an jedem seiner Enden (11, 111) einen Kupplungsstift (12) oder eine hohle Einprägung umfasst, der/die die Zusammenwirkung mit einem zweiten Wellenabschnitt erlaubt;
- eine fest mit dem Wellenabschnitt (6) verbundene Speiche (5);
- verstrebte Ringe (4).

6. Modul (10) nach Anspruch 5, **dadurch gekennzeichnet, dass** der Wellenabschnitt (6) aus einer Folge von aneinander stoßenden röhrenförmigen Segmenten (61, 62, 63, 64, 65) besteht.

7. Modul (10) nach irgendeinem der Ansprüche 5 oder 6, **dadurch gekennzeichnet, dass** es auch einen Lagerring (8) zwischen zwei Abstandsringen (7) umfasst.

## Claims

1. An omnidirectional wheel (1) comprising a central hub (2) on which is peripherally mounted a tread (3) comprised of a juxtaposition of wheels or sleeves arranged in radial planes, said omnidirectional wheel (1) having spokes (5, 51) connected in pairs by a shaft segment (6) coaxial to the hub (2) and with a round cross-section onto which freely rotating rings (4) are inserted, said wheel (1) being **characterized in that** said shaft segment (6) also includes spacers (7) interposed between each of said rings (4), said spacers (7) being shaped such that said rings remain in a radial position, and **in that** said shaft segment (6) is comprised of a succession of several abutting tubular segments (61, 62, 63, 64, 65).

2. The omnidirectional wheel (1) according to claim 1, wherein on the shaft segment (6), between two spacers (7), is mounted a bearing ring (8) for carrying the ring (4).

3. The omnidirectional wheel (1) according to claim 2, wherein the bearing ring (8, 81, 82) is configured so as to be adapted to the shape of the wall of the tubular segment (61, 62, 63, 64, 65).

4. The omnidirectional wheel (1) according to any one of claims 1 to 3, wherein the hub (2) is comprised of two half-rims (9) made integral with each other by gripping the spokes (5, 51).

5. A module (10) for assembling an omnidirectional wheel (1) according to any one of claims 1 to 4, including:
- an abuttable shaft segment (6), which includes at each of its ends (11, 111) a coupling stud (12) or a hollow indentation permitting the cooperation with a second shaft segment;
- a spoke (5) integral with the shaft segment (6);
- spaced apart rings (4).

6. The module (10) according to claim 5, wherein the shaft segment (6) is comprised of a succession of several abutting tubular segments (61, 62, 63, 64, 65).

7. The module (10) according to any one of claims 5 or 6, wherein it also includes a bearing ring (8) between two spacers (7).
